# FASCICULE DE BREVET EUROPEEN

(11) **EP 0 930 400 B1**
(45) Date de publication et mention de la délivrance du brevet: **23.07.2003**
(21) Numéro de dépôt: 98403180.7
(22) Date de dépôt: 16.12.1998
(51) Int. Cl.: E01F 9/019, E01F 13/08

(54) **Dispositif d'extraction d'un boîtier contenu dans une chambre souterraine**
Vorrichtung zum Ausziehen eines Behältnisses aus einem Untergrundschacht
Device for extracting a box out of an underground chamber

(30) Priorité: 23.12.1997 FR 9716382
(43) Date de publication de la demande: 21.07.1999
(73) Titulaire: BARAT S.A., 41110 Saint Aignan sur Cher (FR)
(72) Inventeur: Provost, Christian, Couddes 41700 Contres (FR)
(74) Mandataire: Armengaud Ainé, Alain

(56) Documents cités:
- EP-A- 0 694 433
- FR-A- 2 580 690
- FR-A- 2 739 637
- FR-A- 2 740 484
- US-A- 3 029 713
- US-A- 4 762 439

## Description

La présente invention est relative à un dispositif permettant l'extraction d'un boîtier particulièrement destiné à des applications de distribution analogiques ou numériques de signaux pour réseaux téléphoniques, pour réseaux de vidéo communication, de distribution électrique, de gestion de feux tricolores ou de bornes foraines, ce boîtier étant initialement contenu au sein d'une chambre souterraine neuve ou existante.

Elle vise plus particulièrement à permettre, d'une part à l'état de repos, tout d'abord l'entreposage du boîtier à l'intérieur d'une chambre, l'ensemble du réseau filaire étant lové à l'intérieur de la fosse, et d'autre part à l'état actif, à assurer l'extraction du boîtier et son maintien à hauteur d'homme et en dehors de la fosse. On connaît deja une articulation pour un panneau pivotant de protection pour fosse (voir FR 2 739 637 A).

On connaît aussi des dispositifs d'extraction de boîtiers, traditionnellement enterrés dans des ouvrages souterrains, sécurisés par le recouvrement à l'aide de plaques ou tampons en fonte ou béton éventuellement assistés à l'ouverture par un système de ressorts ou de vérins ; ces dispositifs utilisent un châssis articulé à l'aide d'un système de biellettes conformées en parallélogramme pour assurer un mouvement pivotant ou vertical au bâti relié au châssis et portant le boîtier. Néanmoins, ces dispositifs d'extraction assurent seulement le maintien du boîtier dans une position verticale au-dessus de la fosse. Cette cinématique possède quelques inconvénients et tout particulièrement, le boîtier demeure à l'aplomb de la fosse, les tampons ou les plaques sont maintenues ouvertes, ce qui ne favorise pas l'accessibilité au boîtier de l'utilisateur dans des conditions de sécurité optima est obligé de maintenir ouverts les tampons ou les plaques. Il y a donc un risque de chute d'outils ou de personnes à l'intérieur de la fosse, que ces personnes soient des intervenants sur le boîtier, ou de simples passants circulant au voisinage de la fosse.

La présente invention vise donc à pallier ces inconvénients en proposant un dispositif qui assure à la fois l'extraction d'un boîtier d'un ouvrage souterrain et son positionnement en dehors de la zone d'ouverture des trappes de recouvrement, afin de garantir une intervention sécurisée de l'utilisateur sur le boîtier compte tenu principalement que les plaques de recouvrement peuvent être refermées sur l'ouvrage souterrain, même lorsque le boîtier est extrait de sa fosse.

A cet effet, le dispositif d'extraction d'un boîtier contenu dans une chambre souterraine, comportant des pattes de fixation coopérant au niveau d'une des parois de la chambre souterraine, sur lesquelles est rapporté un châssis articulé qui permet d'extraire ledit boîtier de ladite chambre, se caractérise en ce que le châssis est relié à son autre extrémité à un berceau supportant le boîtier, ce berceau positionnant le boîtier en dehors de l'aplomb de la chambre souterraine, au-dessus du sol et à hauteur d'homme, des plaques ou tampons pouvant alors refermer ladite chambre souterraine.

D'autres caractéristiques et avantages de la présente invention ressortiront de la description faite ci-après, en référence aux dessins annexés qui en illustrent un exemple de réalisation dépourvu de tout caractère limitatif. Sur les figures :
- la figure 1 est une vue en coupe et en élévation latérale d'une chambre souterraine munie d'un dispositif d'extraction de boîtier, dans une configuration chambre refermée ;
- la figure 2 est une vue en coupe et en élévation latérale d'une chambre souterraine munie d'un dispositif d'extraction de boîtier, dans une configuration de chambre ouverte et en cours de déploiement du dispositif d'extraction ;
- la figure 3 est une vue en coupe et en élévation latérale d'une chambre souterraine munie d'un dispositif d'extraction de boîtier, dans une configuration de chambre refermée, le dispositif étant totalement déployé ;
- la figure 4 est une vue en coupe et en élévation frontale des pattes de fixation du châssis articulé ;
- la figure 5 est une vue en coupe et en élévation latérale de la figure 4 ;
- la figure 6 est une vue en coupe et en élévation frontale d'un berceau pouvant être relié à un châssis articulé, faisant partie du dispositif de déploiement ;
- la figure 7 est une vue en coupe et en élévation latérale de la figure 6 ;
- la figure 8 est une vue en coupe et en élévation latérale d'une chambre souterraine munie d'un dispositif d'extraction de boîtier selon un deuxième mode de réalisation, dans une configuration de chambre refermée, le dispositif étant totalement déployé ;
- la figure 9 est une vue en coupe et en élévation latérale d'une chambre souterraine munie d'un dispositif d'extraction de boîtier selon un troisième mode de réalisation ;
- la figure 10 est une vue en coupe et en élévation frontale de la figure 9.

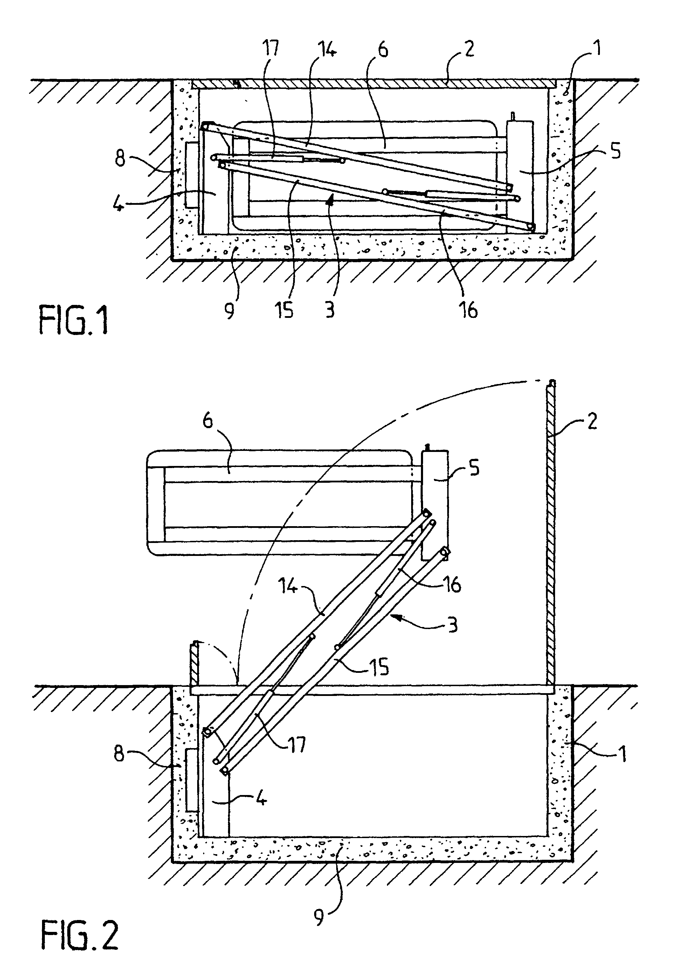

Selon un mode préféré de réalisation du dispositif objet de l'invention, (se reporter aux figure 1, 2, 3) celui-ci comporte tout d'abord dans un ouvrage maçonné 1 ou bétonné de génie civil, équipé d'une trappe 2 ou d'une série de trappes communément appelées tampons ou plaques de fermeture, un châssis articulé 3 connecté d'une part à des pattes de fixation 4 solidaires de l'une des parois de l'ouvrage, et d'autre part à un berceau articulé 5 sur lequel repose un boîtier 6.

Selon un premier mode de réalisation, les pattes de fixation 4 sont constituées par au moins un profilé métallique de section droite transversale, conformé en I, en T, en U, et qui repose grâce à une semelle 7 rapportée à l'une de ses extrémités par soudure ou par des moyens de fixation connus, sur l'une des parois 8, 9, préférentiellement une paroi de côté ou de fond de l'ouvrage souterrain.

La semelle 7 coopère rigidement par des pattes de scellement ou par des goujons avec l'ouvrage en maçonnerie afin d'assurer un maintien du profilé selon une direction sensiblement perpendiculaire au plan constitué par la paroi de fond ou de côté de la fosse, pour conférer une assise ou un maintien rigide à un châssis 3 qui est rapporté et articulé sur au moins un des profilés 4.

En effet, selon une première variante, on dispose un profilé 4 dans l'ouvrage souterrain, préférentiellement au niveau d'un angle de la fosse.

Selon une deuxième variante, l'ouvrage souterrain comporte deux profilés 4, chacun disposé à un angle et dans un plan sensiblement parallèle à l'une des parois de côté 8 de l'ouvrage.

Selon une autre caractéristique, le profilé 4 comporte au niveau de son extrémité libre une pluralité d'orifices 10, 11 radiaux qui autorisent le passage d'axes superposés 12, 13, ceux-ci coopèrent au niveau d'un châssis articulé 3 formé, selon un premier mode de réalisation, par deux bielles parallèles 14, 15 qui s'articulent par leurs autres extrémités au niveau d'un berceau 5 qui supporte le boîtier 6. Eventuellement, les axes de solidarisation 12, 13 des biellettes 14, 15 aux profilés 4 permettent de relier les profilés entre eux de manière à rigidifier l'ensemble du montage.

Les biellettes 14, 15 forment un parallélogramme déformable qui assure un mouvement d'extraction du berceau 5 supportant le boîtier 6 de l'intérieur de la chambre, en conservant la verticalité au boîtier 6.

Afin d'assister le mouvement d'extraction, on dispose entre l'un des profilés 4 et l'une des biellettes 14, 15, ou entre ces biellettes, des vérins 16, 17 ou des organes déformables élastiquement tels que notamment des ressorts à spires.

Selon un autre mode de réalisation, le châssis articulé 3 est réalisé à partir de deux bielles 14, 15, l'une d'entre elles étant reliée à un axe d'articulation 12 ou 13 sur le profilé 4, l'autre étant connectée à l'extrémité libre de la première biellette 14 ou 15 de manière à conformer un V déformable, l'extrémité libre de la deuxième biellette 14 ou 15 étant connectée sur le berceau 5 support de boîtier 6.

On pourra bien entendu, comme pour le châssis articulé 3 en parallélogramme, adjoindre à ce type d'agencement particulier de biellettes 14, 15 un système d'assistance au déploiement utilisant notamment des vérins 16, 17 ou des ressorts.

En fonction des applications requises et particulièrement de la masse du boîtier à extraire, le châssis articulé 3 pourra être doublé à l'aide d'un deuxième profilé 4.

Quel que soit le mode de réalisation du châssis articulé 3, on utilise pour former les biellettes 14, 15 des profilés standard du commerce qui sont assemblés entre eux par des techniques connues de mécanosoudage, de rivetage et d'assemblage par vis-écrous.

Le châssis articulé 3 permet d'extraire le berceau 5 et le boîtier 6 et de placer celui-ci en dehors de l'aplomb de la chambre 1, la ou les biellettes 14, 15 se plaçant sensiblement dans le prolongement des profilés de maintien 4.

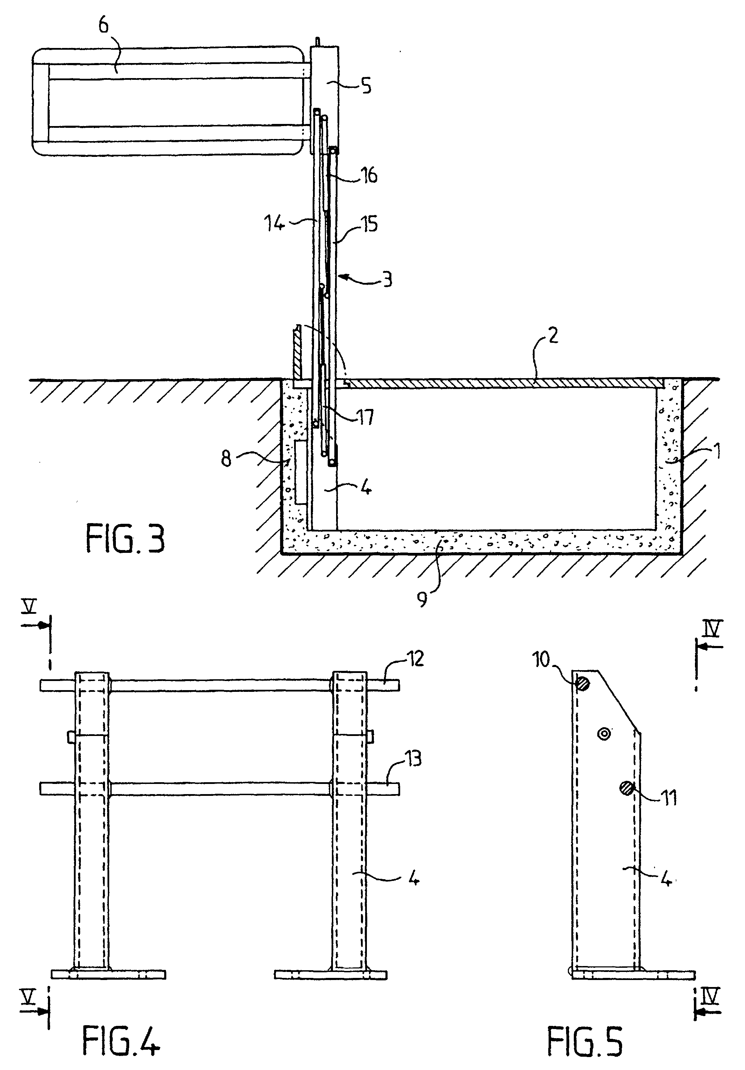

On peut ainsi refermer la quasi totalité de la chambre souterraine 1 par les plaques ou tampons 2 qui avaient été initialement ouvertes ou ôtées pour une plus grande sécurité du chantier. Préférentiellement, le système de fermeture comporte une pluralité de plaques ou tampons qui se verrouillent entre eux et qui ne laissent subsister qu'une ouverture suffisante pour le passage du châssis 3 (cf. figure 3).

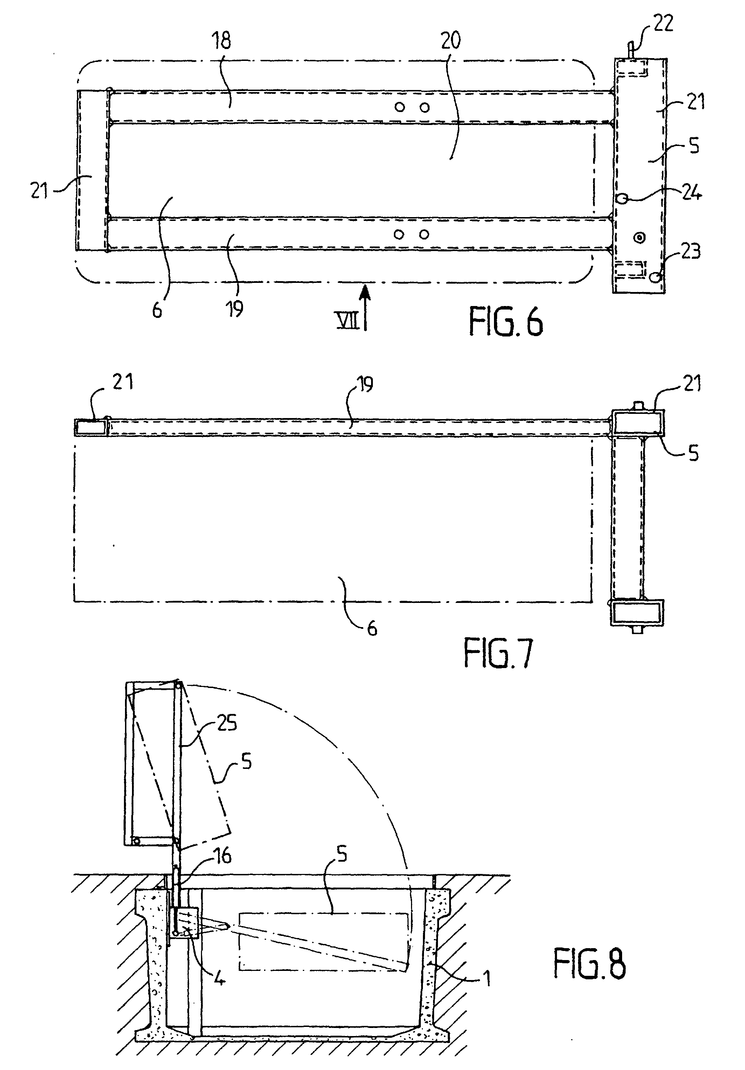

Selon une autre caractéristique de l'invention, le berceau support 5 du boîtier 6 (figures 6 et 7) est réalisé par l'assemblage d'une pluralité de poutrelles 18, 19 ou profilés métalliques qui comportent tout d'abord un dosseret 20 sur lequel repose le boîtier 6 et une façade 21 sensiblement perpendiculaire au dosseret, celle-ci étant reliée aux extrémités libres du châssis articulé 3 par des points d'articulation 22 ou des biellettes 14, 15.

Ainsi, on pourra se reporter à la figure 6 qui illustre une forme particulière du berceau 5, constitué notamment de deux profilés 18, 19 métalliques disposés parallèlement et reliés à chaque extrémité, d'une part à une poutrelle de liaison 21, et d'autre part à une façade formée éventuellement de deux bras verticaux reliés entre eux par des tirants horizontaux ou seulement par un montant vertical.

Le ou les montants verticaux 21 ou horizontaux 18, 19 du berceau 5 comportent à l'une de leurs extrémités une pluralité d'orifices 23, 24 permettant le passage d'axes d'articulation venant de l'extrémité d'une ou de biellettes 14, 15 formant le châssis articulé 3.

Ces montants comportent également des points d'ancrage permettant de connecter les systèmes d'assistance au déploiement (vérins, ressorts...).

La combinaison des mouvements de rotation et de translation effectuée par le châssis 3 et le berceau 5 permet de positionner le boîtier 6 relié au berceau 5, en dehors de l'aplomb de la chambre souterraine 1 et préférentiellement dans une position latérale à la chambre souterraine au-dessus du sol.

Cette cinématique autorise également le positionnement du boîtier à hauteur d'homme, dans une configuration qui permet une intervention aisée, ergonomique et en toute sécurité.

On se reportera maintenant à la figure 8 qui illustre un autre mode de réalisation d'un dispositif d'extraction objet de l'invention.

Ainsi, les pattes de fixation 4 du châssis articulé 3 sont constituées par des cornières qui sont reliées à l'une des faces latérales 8 de la chambre souterraine 1, sensiblement dans sa partie supérieure. A ces pattes 4, sont articulés un châssis 3 qui extrait le coffret 6 de la chambre souterraine 1 et qui se dispose selon une position sensiblement perpendiculaire à la chambre souterraine 1. Ce châssis 3, élaboré à partir d'un cadre de poutrelles 25 mécanosoudées, est articulé et comporte également un système d'assistance à l'ouverture à base de vérins 16, 17 ou de ressorts.

On prévoit également de disposer sur celui-ci et sur celui faisant l'objet du premier mode de réalisation décrit précédemment, des dispositifs d'arrêt en rotation qui verrouillent le châssis articulé 3 par rapport aux pattes 4 de fixation dans l'une ou l'autre des configurations (boîtier dans la chambre souterraine et boîtier extrait de la chambre).

Le châssis articulé 3 est pourvu d'un berceau 5 monté d'une manière pendulaire à l'extrémité dudit châssis 3.

Ainsi, lors du mouvement de rotation du châssis articulé 3 par rapport à ses pattes de fixation 4, le berceau 5 qui supporte le boîtier conserve une position sensiblement horizontale pendant toute sa course.

En configuration totalement déployée, le berceau 5 pendulaire se positionne de manière à présenter le boîtier à hauteur d'homme et dans une configuration qui facilite les interventions d'un utilisateur. Ainsi, par exemple le berceau 5 porte boîtier 6 sera verrouillé selon une direction privilégiée, sur le châssis articulé 3 par tout dispositif approprié (butée effaçable par ressort, goupille, goujon,...) afin d'éviter tout basculement intempestif en cours d'intervention.

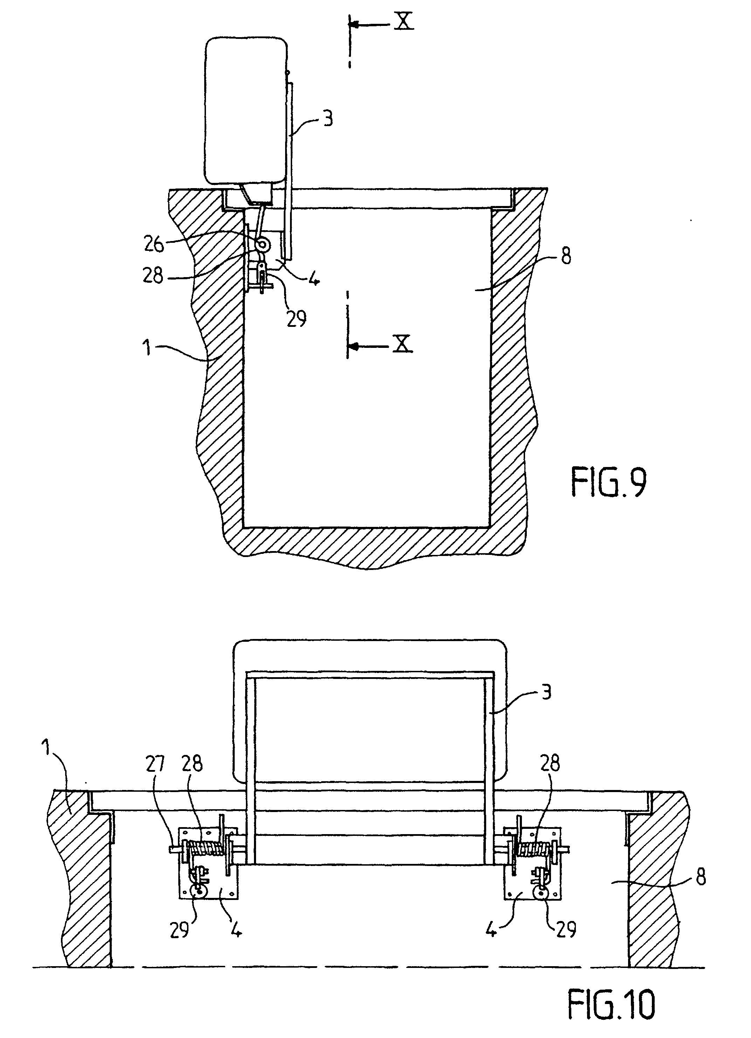

Selon un autre mode de réalisation d'un châssis articulé 3 (se reporter aux figures 9 et 10), permettant d'extraire un boîtier 6 d'une chambre souterraine 1, on dispose sur l'une des parois latérales 8 de la chambre deux pattes de fixation 4 formant équerre, chacune d'entre elles étant munie d'orifices 26 pour le passage d'un axe de liaison 27 avec un châssis articulé 3.

Les axes de liaison 27 faisant saillie perpendiculairement au bâti principal du châssis articulé 3, coopèrent avec les équerres des pattes de fixation 4 par l'intermédiaire de ressorts 28 à spires hélicoïdales qui peuvent être compensés. En effet, les extrémités des brins de chacun des ressorts 28 reposent respectivement, d'une part sur le châssis articulé 3, et d'autre part sur un doigt 29 articulé dont l'amplitude de la course peut être modifiée pour déterminer un point de contact entre le brin et le doigt. Ainsi, selon un premier réglage, entre une position complètement ouverte et une position complètement fermée du châssis, le doigt et l'extrémité du brin du ressort demeurent en contact durant toute la course, ce qui impose au ressort de compenser tout au long du trajet du châssis. Selon un second réglage, entre une position complètement ouverte et une position complètement fermée du châssis, le doigt et l'extrémité du brin du ressort ne demeurent pas en contact durant toute la course, pendant une fraction de la course le brin du ressort ne touche pas l'extrémité du doigt, ce qui n'imprime aucun travail des ressorts (l'ouverture ou la fermeture n'est pas compensée), durant l'autre fraction de la course, le doigt est en contact avec l'extrémité du brin du ressort, le mouvement s'effectuant de manière compensée.

Le châssis articulé 3 comporte un cadre dont le dosseret reçoit un boîtier 6 qui, lorsque le dispositif est complètement déployé, se présente à hauteur d'homme et en dehors de l'aplomb de la chambre souterraine, préférentiellement sur le côté, de manière à permettre une fermeture quasi totale par les plaques ou tampons pour garantir une intervention en toute sécurité.

Le dispositif décrit précédemment offre de multiples avantages, il garantit une intervention à hauteur d'homme dans un endroit sécurisé, il supprime les boîtiers techniques sur les trottoirs ou dans les parties communes d'immeubles, il permet l'incorporation de ces boîtiers techniques dans des zones protégées, notamment du vandalisme, en raison de l'emploi de tampons sécurisés.

## Revendications

1. Dispositif d'extraction d'un boîtier (6) contenu dans une chambre souterraine (1), ledit dispositif comportant des pattes de fixation (4) destinées à coopérer au niveau d'une des parois (8, 9) de la chambre souterraine (1), sur lesquelles est connectée d'une part un châssis articulé (3) qui permet d'extraire ledit boîtier (6) de ladite chambre (1), **caractérisé en ce que** le châssis est relié, à son autre extrémité à un berceau (5) destiné à supporter et à positionner le boîtier (6) en dehors de l'aplomb de la chambre souterraine (1), au-dessus du sol et à hauteur d'homme, ladite chambre souterraine pouvant alors être refermée par des plaques ou tampons (2).

2. Dispositif d'extraction selon la revendication 1, **caractérisé en ce que** le châssis articulé (3) comporte au moins un jeu de biellettes (14, 15) conformées en parallélogramme, reliées d'une part par des points d'articulation (12, 13) à au moins une patte de fixation (4) et d'autre part à un berceau (5), ledit châssis (3) étant éventuellement pourvu d'un système d'assistance à l'ouverture comportant des vérins ou des ressorts (16, 17).

3. Dispositif d'extraction selon la revendication 1, **caractérisé en ce que** le châssis articulé (3) est formé par deux biellettes (14, 15), conformées en V, l'une d'entre elles étant reliée par un point d'articulation (12) à une patte de fixation (4), l'autre étant connectée d'une part à l'extrémité de la première biellette, et d'autre part au berceau (5) supportant le boîtier (6), ledit châssis étant éventuellement pourvu d'un système d'assistance à l'ouverture comportant des vérins ou des ressorts (16, 17).

4. Dispositif d'extraction selon l'une des revendications précédentes, **caractérisé en ce que** le châssis articulé (3) comporte un berceau (5) pendulaire.

5. Dispositif d'extraction selon l'une des revendications précédentes, **caractérisé en ce que** le châssis (3) est articulé sur des pattes de fixation (4) coopérant au niveau de l'une des parois de la chambre souterraine (1), par l'intermédiaire d'un système de ressorts (28), qui est monté sur des axes (27) reliant ledit châssis (3) aux pattes de fixation (4), un système de doigt (29) agissant sur l'extrémité d'un des brins des ressorts permettant de compenser le poids dudit dispositif lors de son extraction.

## Patentansprüche

1. Vorrichtung zum Ausziehen eines Behältnisses (6), das in einem Untergrundschacht (1) enthalten ist, wobei die Vorrichtung Befestigungsschienen (4) aufweist, die auf der Höhe einer der Wände (8, 9) des Untergrundschachts (1) zusammenwirken, mit denen einerseits ein angelenktes Untergestell (3) verbunden ist, das das Herausziehen des Behältnisses (6) aus dem Schacht (1) ermöglicht, **dadurch gekennzeichnet, daß** das Untergestell an seinem anderen Ende mit einer Wiege (5) verbunden ist, die dazu dient, das Behältnis (6) zu halten und es außerhalb des Bereichs senkrecht über dem Untergrundschacht (1) oberhalb des Bodens und auf der Höhe eines Menschen zu positionieren, wobei der Untergrundschacht dann durch Platten oder Stopfen (2) wieder verschlossen werden kann.

2. Ausziehvorrichtung nach Anspruch 1, **dadurch gekennzeichnet, daß** das angelenkte Untergestell (3) mindestens einen Satz von ein Parallelogramm bildenden Schwingarmen (14, 15) aufweist, die einerseits durch Gelenkpunkte (12, 13) mit mindestens einer Befestigungsschiene (4) und andererseits mit einer Wiege (5) verbunden sind, wobei das Untergestell (3) gegebenenfalls mit einem Öffnungs-Hilfssystem mit Zylindern oder Federn (16, 17) versehen ist.

3. Ausziehvorrichtung nach Anspruch 1, **dadurch gekennzeichnet, daß** das angelenkte Untergestell (3) von zwei miteinander ein V bildenden Schwingarmen (14, 15) gebildet ist, von denen der eine durch einen Gelenkpunkt (12) mit einer Befestigungsschiene (4) und der andere einerseits mit dem Ende des ersten Schwingarms und andererseits mit der das Behältnis (6) tragenden Wiege (5) verbunden ist, wobei das Untergestell gegebenenfalls mit einem Öffnungs-Hilfssystem mit Zylindern oder Federn (16, 17) versehen ist.

4. Ausziehvorrichtung nach einem der vorangehenden Ansprüche, **dadurch gekennzeichnet, daß** das angelenkte Untergestell (3) eine pendelnde Wiege (5) aufweist.

5. Ausziehvorrichtung nach einem der vorangehenden Ansprüche, **dadurch gekennzeichnet, daß** das Untergestell (3) an Befestigungsschienen (4), die auf der Höhe der einen der Wände des Untergrundschachts (1) zusammenwirken, mittels eines Systems von Federn (28) angelenkt ist, das an Achsen (27) montiert ist, welche das Untergestell (3) mit den Befestigungsschienen (4) verbinden, wobei ein Fingersystem (29) auf das Ende des einen der Trumms der Federn einwirkt, was die Kompensation des Gewichts der Vorrichtung bei ihrem Herausziehen ermöglicht.

## Claims

1. Extraction device for a housing (6) contained in an underground chamber (1), the said device comprising fixing lugs (4) intended to cooperate at the level of one of the walls (8, 9) of the underground chamber (1), on which is connected at one part, an articulated chassis (3) which allows said housing (6) to be extracted from said chamber (1), **characterized in that** the said chassis is connected, at its other end to a cradle (5) intended to support and to position the housing (6) outside the perpendicular of the underground chamber (1), above ground and at the height of a person, said underground chamber being closed by plates or covers (2).

2. Extraction device according to claim 1, **characterized in that** the articulated chassis (3) comprises a set of small connecting rods (14, 15), in the shape of a parallelogram, connected at one part by articulation points (12, 13) to at least one fixing lug (4) and at another part to a cradle (5), said chassis (3) being optionally provided with a system which assists opening comprising jacks or springs (16, 17).

3. Extraction device according to claim 1, **characterized in that** the articulated chassis (3) is formed by two small connecting rods ( 14, 15), which are V-shaped, one of them being connected by an articulation point (12) to a fixing lug (4), the other being connected at one part to the end of the first small connecting rod and at another part to the cradle (5) supporting the housing (6), said chassis being optionally provided with a system which assists opening comprising jacks or springs (16, 17).

4. Extraction device according to one of the previous claims, **characterized in that** the articulated chassis (3) comprises a swinging cradle (5).

5. Extraction device according to one of the previous claims, **characterized in that** the chassis (3) is articulated on fixing lugs (4) cooperating at the level of one of the walls of the underground chamber (1), via a system of springs (28), which is mounted on axles (27) connecting said chassis (3) to the fixing lugs (4), a system of fingers (29) acting on the end of one of the strands of the springs, which allows the weight of said device to be compensated for during its extraction.
